# EUROPEAN PATENT SPECIFICATION

(11) **EP 2 326 824 B1**
(45) Date of publication and mention of the grant of the patent: **05.09.2012**
(21) Application number: 09736642.1
(22) Date of filing: 21.09.2009
(51) Int. Cl.: F02M 25/08

(54) **FUEL VAPOUR STORAGE**
KRAFTSTOFFDAMPFSPEICHERUNG
STOCKAGE DE VAPEUR DE CARBURANT

(30) Priority: 22.09.2008 GB 0817315
(43) Date of publication of application: 01.06.2011
(73) Proprietor: Mast Carbon Automotive Ltd., Woking, Surrey GU21 2PG (GB)
(72) Inventor: HUYNH, Tho, Troung, Millbrook Southampton SO16 9PH (GB)
(74) Representative: Polypatent
(86) International application number: PCT/GB2009/051223
(87) International publication number: WO 2010/032065

(56) References cited:
- WO-A-2004/105439
- WO-A-2006/077607
- WO-A-2008/027935
- WO-A-2009/080127
- WO-A-2009/080128
- US-A- 5 269 837
- US-A1- 2002 174 857

## Description

### FIELD OF THE INVENTION

The present invention relates to the reduction of automotive evaporative emissions and in particular to the provision of a fuel vapour storage canister for fitting to motor vehicles for that purpose, to a motor vehicle having such a canister fitted to it and to a method of managing fuel vapour emission from a vehicle fuel tank using such a canister. The invention is also described in UK Patent Application No. 0817315.5 dated 22 September 2008, the disclosure of which is incorporated by reference herein in its entirety.

### BACKGROUND TO THE INVENTION

Motor vehicle fuel (e.g. gasoline for automobiles) is relatively volatile and there is a general desire to reduce the amount of fuel vapour that escapes into the atmosphere. Indeed, in many countries there is legislation that places limits on the amount of fuel vapour that may be released from motor vehicles. Evaporative fuel emission occurs principally due to venting from vehicle fuel tank(s). Because fuel is volatile, the air in a fuel tank will generally be heavily laden with fuel vapour, and it is the escape of this air to the atmosphere that is a primary source of fuel vapour emissions from motor vehicles.

There are two main types of evaporative venting of fuel vapour from fuel tanks, namely so-called diurnal breathing losses (DBL) and refuelling losses. Diurnal breathing loss (also known as "bleeding") generally occurs relatively slowly over time, e.g., when a vehicle is parked, as changes in temperature and/or pressure cause air laden with hydrocarbons to escape from the fuel tank. Refuelling loss occurs more rapidly during refuelling as fuel displaces air from the tank. Unless steps are taken to prevent untreated air from the fuel tank from reaching the atmosphere, the fuel vapour is lost to the atmosphere.

It is thus well known to provide motor vehicles with a fuel vapour storage canister for temporary storage of fuel vapour from its fuel tank(s), e.g. to absorb bleeding and refuelling losses as they occur. (The term absorption as used throughout this description should be interpreted broadly so as to also include adsorption, unless the context demands otherwise.) Stored fuel vapour may then be drawn from the fuel vapour storage canister and into the vehicle's engine for burning while the vehicle is in use. These fuel vapour storage canisters are often referred to as "carbon canisters". This is because carbon, e.g. activated carbon, is commonly used as an absorbent material for storing the hydrocarbons comprising the fuel vapour.

In fuel recovery systems for the European automobile market, refuelling losses/emissions do not play such an important role in carbon canister design since these refuelling emissions are generally not necessarily discharged through the carbon canister in line with European legislation. However, in integrated fuel vapour storage and recovery systems, e.g. for use in the North American automobile market, refuelling emissions are discharged through the carbon canister, and carbon canisters for this market often need to be able to deal with these much faster losses.

It is impractical for an automobile's fuel tank system to be sealed. To reduce fuel vapour loss to the atmosphere, the fuel tank is therefore vented via a canister containing suitable fuel absorbent materials. High surface area activated carbon granules (or in pellet form) are widely used to temporarily absorb the fuel vapour. Thus as fuel-laden air from the fuel tank is vented, it passes through the canister, and the hydrocarbon content of the air is reduced by absorption into the carbon. This absorption of fuel vapour into the canister may be referred to as "loading". When the vehicle engine is running, the canister is connected via a conduit to an air inlet manifold of the engine. The reduced pressure at the inlet manifold serves to suck air from the atmosphere through the canister and causes fuel vapour stored in the canister during a previous loading phase to be released from the absorbent material in the canister (desorption) and into the air sucked into the engine for burning. This removal of stored hydrocarbons from the canister may be referred to as "purging". Thus in normal use a carbon canister undergoes a series of loading and purging cycles as fuel vapour is successively trapped in the canister and then released for burning in the vehicle's engine.

US-A-6540814 (Hiltzik et al., Westvaco) discloses that then current canister systems, containing activated carbon of uniform capacity, were readily capable of capturing and releasing 100 grams of vapour during adsorption and air purge regeneration cycling. These canister systems were also required to have low flow restrictions in order to accommodate the bulk flow of displaced air and hydrocarbon vapor from the fuel tank during refuelling. The authors further disclosed that regulations had been promulgated that required a change in the approach with respect to the way in which vapours should be controlled. Allowable emission levels from canisters would be reduced to such low levels that the primary source of emitted vapour, the fuel tank, is no longer the primary concern, as current conventional evaporative emission control appeared to have achieved a high efficiency of removal. Rather, the concern now was the hydrocarbon left on the carbon adsorbent itself as a residual "heel" after the regeneration (purge) step. Such emissions typically occurred when a vehicle has been parked and subjected to diurnal temperature changes over a period of several days, commonly called "diurnal breathing losses." The California Low Emission Vehicle Regulation made it desirable for these diurnal breathing loss (DBL) emissions from the canister system to be below 10 mg ("PZEV") for a number of vehicles beginning with the 2003 model year and below 50 mg, typically below 20 mg, ("LEV-II") for a larger number of vehicles beginning with the 2004 model year. ("PZEV" and "LEV-II" are criteria of the California Low Emission Vehicle Regulation.). The disclosed solution was to provide a canister with series-connected primary, secondary and tertiary adsorbent beds, and with adsorbent in the tertiary or vent side of the canister having an adsorbent that exhibits a flattened adsorbent isotherm on a volumetric basis. This isotherm shape was important for reasons related to purge efficiency across the adsorbent bed depth. For an adsorbent with a flat adsorption isotherm, the concentration of hydrocarbon vapour in equilibrium with adsorbed hydrocarbon, by definition, decreases further as the adsorbed hydrocarbon is removed compared with an adsorbent with a more steeply sloped isotherm. Thus, when such a material is employed as an adsorbent volume on the vent-side region of a canister, purge is able to reduce the vapor concentration in the area of the purge inlet to a very low level. Since it is the vapor near the purge inlet that eventually emerges as bleed, decreasing this concentration reduces the bleed emission level.

US-A-7114492 (Reddy, GM Global Technology) discloses that the problem of bleed emissions is particularly acute in hybrid vehicles. Hybrid vehicles combine a gasoline fuelled internal combustion (IC) engine and an electric motor for better fuel economy. As will be appreciated, in a hybrid vehicle, the internal combustion engine is turned off nearly half of the time during vehicle operation. Because the purging of a carbon canister takes place only during operation of the internal combustion engine when the desorbed vapour can be consumed in engine combustion, the carbon canister purging with fresh air occurs less than half of the time the hybrid vehicle is running. Thus, although a hybrid vehicle generates nearly the same amount of evaporative fuel vapour as does a conventional vehicle, its lower purge rate may be insufficient to clean the adsorbed fuel out of the carbon canister, thereby resulting in higher evaporative bleed or breakthrough emissions. The disclosed solution is to provide a canister having primary, secondary and tertiary adsorbent beds (the tertiary adsorbent bed being referred to as a "scrubber" and to supply heat from the engine exhaust during the purge phase to facilitate removal of adsorbed hydrocarbons.

WO 2009/080127 (Catton et al., Kautex Textron, the disclosure of which is incorporated herein by reference) considers a further issue which arises with the use of so-called flexi fuels which comprise a considerable amount of ethanol. Ethanol is a highly volatile fuel which has a comparatively high vapour pressure. For instance, the so-called E10 fuel (10% ethanol) has the highest vapour generation currently in the market. That means that the fuel vapour uptake of the carbon canister from the fuel tank is extremely high. On the other hand, during normal purging modes of a conventional carbon canister only a certain percentage of the fuel vapour uptake may be discharged. As a result the fuel vapour capacity of an ordinary carbon canister is exhausted relatively fast. The bleed emissions of a fully loaded carbon canister normally then increase to an extent which is beyond the emission values permitted under the law. The inventors aim to provide a fuel vapour storage and recovery canister which is further improved with regard to the so-called bleed emissions, i.e. which has an improved diurnal breath loss efficiency, and to do so with a relatively compact design having a relatively low carbon volume but nevertheless having a high working capacity. The solution is to provide a canister having at least primary and secondary adsorbent beds connected in series with the beds being separated from each other by an air gap diffusion barrier. In particular by providing an air gap insulation between several vapour storage compartments or several vapour storage beds the hydrocarbon diffusion towards a lower concentration of hydrocarbons, i.e. towards the atmosphere, is significantly slowed down, thus significantly reducing the diurnal breathing losses. In one embodiment of the fuel vapour storage device at least the primary and secondary adsorbent beds are arranged in concentric relationship, the term "concentric" not necessarily meaning that the adsorbent beds have a circular cross-section. In further embodiments there is provided a purge heater which is activated during purging and which leads to a significant improvement of hydrocarbon removal rate during operation of the internal combustion engine. The purge heater may be located in the purge heater compartment directly communicating with said purge port. Advantageously the purge heater is located at the upstream end of the airflow during the purging cycle and in order to enhance heat transfer from the purge heater into the carbon bed it is advantageous for the purge heater compartment to be surrounded by an adsorbent bed in a non-insulated fashion, thus allowing heat radiation into the surrounding bed and improvement in the efficiency of purging.

US-A-5743943 (Mareda *et al*., Nippondenso) is concerned with the production of a carbon canister in which diffusion of hydrocarbon vapour is reduced without unacceptable pressure drop across the canister. It discloses an adsorbent canister having primary and secondary adsorbent chambers disposed in side-by-side relationship and interconnected by a communications passage having a boustrophedon region. However, the boustrophedon region of the communications passage is employed only for increasing the diffusion path between the adsorbent chambers and it is separated from the primary and secondary adsorbent beds by gas-filled compartments. No mention is made of the use of a flow-path having a boustrophedon or other non-linear region to serve as a heat-exchanger receiving heat from an adsorbent bed by thermal conduction through a wall of said bed.

US-A-5269837 (Ohashi et al.) discloses an evaporation loss control device including a fuel vapour storage canister. The fuel vapour storage canister comprises a primary absorbent bed filled with activated carbon and a secondary absorbent bed filled with a polymer absorbent. The two beds are connected via a winding path.

It is one object of the present invention to improve efficiency of the device when loading or unloading the canister. This object is particularly achieved by an absorbent canister according to claim 1 which would particularly differs from the known canister in that both beds are filled with activated carbon and that the primary absorbent is in contact with the winding path which in turn is in heat-exchanging relationship with the ambient air.

Advantageous embodiments may be derived from the dependent claims.

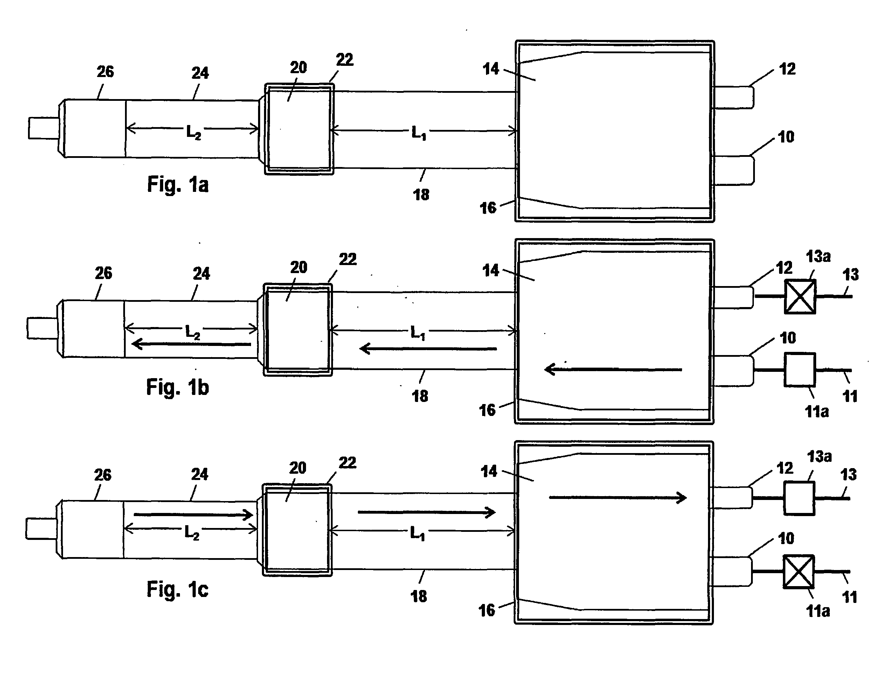

The section of the air-flow channel arranged to pass between the inner and outer walls of the housing thus provides a heat-exchange function for exchanging heat between air in the channel and the environment outside the outer wall, which might comprise ambient air, or a heat sink, such as a volume of metal and / or a chamber containing thermal wax. This heat exchange functionality can help improve the efficiency of the canister both when loading and when purging. This is because the loading process is more efficient at lower temperatures, but the absorption process itself is exothermic. In accordance with embodiments of the invention, air heated by exothermic absorption in the first fuel vapour compartment during canister loading is passed through the channel adjacent the outer wall of the canister prior to reaching the second fuel vapour compartment for further vapour absorption. Thus the heated air from exothermic loading in the first fuel vapour compartment may be cooled by thermal conduction through the outer wall to the ambient air, or other thermal mass/heat sink, surrounding the canister. Because the fuel vapour laden air cools before reaching the second fuel vapour compartment, the absorption process in the second fuel vapour compartment is made more efficient. Similarly, the purging process is more efficient at higher temperatures (hence the use of the heaters in the Figure 1 design), but the desorption process itself is endothermic. In accordance with embodiments of the invention, air cooled by endothermic desorption in the second fuel vapour compartment during canister purging is passed through the channel adjacent the outer wall of the canister prior to reaching the first fuel vapour compartment. Thus the cooled air from the endothermic purging process in the second fuel vapour compartment may be warmed by thermal conduction through the outer wall from the ambient air, or other thermal mass / heat sink, surrounding the canister. Because air for purging is warmed before reaching the first fuel vapour compartment, the desorption process in the second fuel vapour compartment is made more efficient. Furthermore, the cavity between the inner and outer walls also acts more generally as an insulation layer to reduce the effect of environmental temperature variations on the canister, e.g. to slow hydrocarbon diffusion losses caused by increasing temperature.

The inner wall and the outer may be in a concentric arrangement, e.g. with the inner wall at least partially enclosed by the outer wall. This can help provide for a compact design. At least a portion of the section of the air-flow channel passing between the inner and outer walls may be divided into a plurality of sub-subsections separated from their respective neighbouring subsections by one or more flow diversion walls connecting between the inner and outer walls. This provides for an air-flow channel passing multiple times (i.e. zigzagging back and forth) within a gap between the inner and outer walls. This can provide an effective length for the air-flow channel to act as a heat exchanger which is greater than the overall characteristic dimensions of the canister. This provides for more efficient heat exchange between air in the air-flow channel and the canister surroundings, as well as providing for an increased diffusion barrier length between the two compartments.

At least a part of the first fuel vapour storage compartment may be defined by the inner wall. Furthermore, the first and second fuel vapour storage compartments may be in a concentric arrangement, for example with the second fuel vapour storage compartment being at least partly surrounded by the first fuel vapour storage compartment. These approaches again can provide for more compact canister designs. At least a part of the section of the air-flow channel passing between the inner and outer walls may be on an opposing side of the first fuel vapour storage compartment compared to a part of the second fuel vapour storage compartment surrounded by the first fuel vapour storage compartment. The first fuel vapour storage compartment may have an annular cross-section, and a part of the air-flow channel may comprise at least a portion of a corresponding annular ring adjacent an end of the first fuel vapour storage compartment. The annular ring portion of the air-flow channel may be separated from the first fuel vapour storage compartment by, for example, a holed wall. This provides an efficient transfer port for air moving between the air-flow channel and the first vapour storage compartment. The first and second fuel vapour storage compartments may contain carbon-based fuel absorbent materials, such as granular or pellet-form activated carbon, or bulk porous carbon structures.

The fuel vapour storage canister may further comprise a third fuel vapour storage compartment in fluid communication with the second vapour storage compartment via a second air-flow channel. This can provide a greater overall storage capacity for the canister, and also provides a second diffusion barrier. The fuel vapour storage canister may further comprise a heater operable to heat air within the canister, for example, a heater element wrapped around the outer wall to still further heat air in the air-flow channel during purging.

According to a second aspect of the invention there is provided a method of managing fuel vapour emissions from a fuel tank comprising providing a fuel vapour storage canister comprising: a housing defining an inner wall and an outer wall; a first fuel vapour storage compartment arranged within a volume defined by the inner wall and coupled to the fuel tank; and a second fuel vapour storage compartment in fluid communication with the first vapour storage compartment, and driving air between the first and second fuel vapour storage compartments along a path passing between the inner and outer walls of the housing.

### BRIEF DESCRIPTION OF THE DRAWINGS

How the invention may be put into effect will now be described, by way of example only, with reference to the accompanying drawings, in which:
Fig. 1a is a block diagram showing the principal components of an evaporative emissions canister according to the invention, and Figs 1b and 1c show the canister of Fig. 1a in loading and purge modes respectively;
Fig 2 is a view of an embodiment evaporative emissions canister from the side and from slightly above;
Fig 3 is a diagrammatic view of a practical form of the canister of Fig. 1a, the view being in vertical section and gas flow being shown for a working or loading mode of the canister;
Fig. 4 is a diagrammatic developed view of portions of a fluid passage between primary and secondary adsorbent beds of the canister showing internal partitions thereof and flow channels in a boustrophedon arrangement, flow being shown for the working or loading mode of the canister and representative temperatures being indicated for that mode;
Fig. 5 is a diagrammatic vertical section of a further embodiment of the canister of Fig. 1a like the embodiment of Fig. 2 except for omission of partitions between secondary and tertiary adsorbent beds and with the flow being shown in the working or loading mode, representative temperatures at points within the canister being indicated;
Figs. 6 and 7 are views similar to Figs 4 and 5 except that the flow is shown for a regeneration or purge mode; and
Fig. 8 is a detail showing a further embodiment of the canister in which a tertiary adsorbent bed is located in an internal space of the canister and a heater for use in the regeneration or purge mode is also shown.

### DETAILED DESCRIPTION OF PREFERRED EMBODIMENTS

Embodiments of the invention provide an absorbent canister for control of emission from an automobile fuel tank, said canister comprising primary and secondary adsorbent beds and a flow passage configured to connect the beds in series, wherein the flow passage includes a heat exchanger configured to exchange heat between the primary adsorbent bed and ambient air, the heat exchanger being internally partitioned to lead the air in a winding path over an external wall of the primary adsorbent bed.

The primary adsorbent bed may be configured for flow end-to end and may have a polygonal, oval or cylindrical side wall, the heat exchanger being configured to cover more than 50% of the area of the side wall, in further embodiments more than 75% of the area of the side wall and in yet further embodiments more than 90% of the area of the side wall. Internal partitions of the heat exchanger may be configured so that the gas makes two, four or six passes over the surface of the side wall. As previously explained, in embodiments the canister has an internal passage extending from one end to another of the primary adsorbent bed, the secondary adsorbent bed being located in the flow passage. Furthermore walls of the internal passage and the secondary adsorbent bed may in some embodiments define an air space between the primary and secondary adsorbent beds. There may further be provided a tertiary adsorbent bed and a second flow passage connecting the secondary and tertiary adsorbent beds in series. In some embodiments the tertiary adsorbent bed is located in the internal passage, and in other embodiments it projects from an end of the internal passage. In the latter case the second air path may be folded by partitions so that the air makes three passes between the secondary and tertiary adsorbent beds. A heater may be connected in series between the third adsorbent bed and an outlet of the internal passage and may comprise omprises one or more tubular carbon monoliths.

Further embodiments of the invention provide a vehicle fuel tank having the canister of any preceding claim connected thereto, the fuel tank being for a passenger car, a goods van or the like including in some embodiments a hybrid internal combustion/electric vehicle.

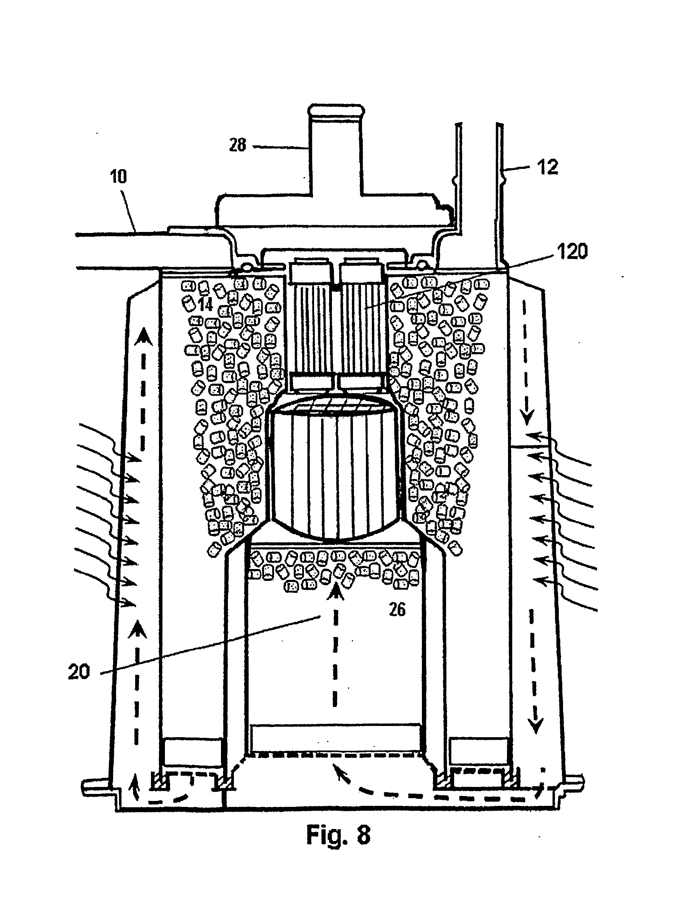

An automotive evaporative emissions canister or fuel vapour storage canister according to the invention comprises at least two series-connected hydrocarbon adsorbent beds. In the embodiment of Figs. 1a-1c fuel tank port 10 and purge port 12 communicate a fuel tank vapour line 11 and an engine purge line 13 with a first end of a primary adsorbent bed 14 of activated carbon or other fuel vapour adsorbent material. First fluid passage 18 communicates the second end of the bed 14 with a first end of a secondary adsorbent bed 20. Second fluid passage 24 communicates the second end of the bed 20 with a first end of a tertiary adsorbent bed 26, whose second end communicates with a vent port 28 which in turn communicates with atmosphere. Each of the beds 14, 20, 26 may contain a different adsorbent material, two of them may contain the same material and that of the third bed may differ, or they may all contain the same adsorbent material, the latter arrangement and the avoidance of use of special grades of activated carbon being an advantage associated with embodiments of this invention. Suitable materials are activated carbon pellets or granules, pellets (Fig. 8) being preferred because they are less prone to shedding of dust. It will be noted that the three beds are in the volume, diameter and length relationship primary > secondary > tertiary. Gas-filled spaces 16, 22 surround side walls of the primary and secondary adsorbent beds 14, 20 as discussed below. Solenoid controlled valves 11a, 13a in vapour line 11 and in purge line 13 provide for control of the direction of gas flow through the canister.

During shut-off the engine of a motor vehicle in which the carbon canister is used, the canister is connected via vapour inlet or tank port 10 to the fuel tank of the motor vehicle and via vent port 28 to the atmosphere. The purge port 12 to the engine may be closed, e.g. through the solenoid operated valve 13a. During engine shut-off the fuel within the fuel tank evaporates into the air space above the fuel. This vapour laden air may flow via vapour inlet port 10 into the carbon canister, the solenoid controlled valve 11a being open. Diurnal breathing loss (also known as "bleeding") generally occurs relatively slowly over time, e.g., when a vehicle is parked, as changes in temperature and/or pressure cause air laden with hydrocarbons to escape from the fuel tank. Refuelling loss occurs more rapidly during refuelling as fuel displaces air from the tank. During refuelling of the vehicle (at least in integrated evaporative emission control systems) the fuel being pumped into the fuel tank displaces the air in the tank and causes an air-flow through the vapour inlet port 10 (refuelling loss). The flow rate broadly corresponds with the rate of fuelling. In these circumstances, hydrocarbon laden air from the fuel tank might be displaced through the carbon canister at a flow rate as high as 60 litres per minute. The activated carbon within the various beds 14, 20, 26 in the carbon canister absorb the hydrocarbons (i.e. hydrocarbon molecules become trapped within the internal pore structure of the carbon) so that air is discharged from the vent port 28 to the atmosphere with a lower fuel vapour content. This state is illustrated in Fig. 1b, the flow of air and fuel vapour being indicated by arrows.

During engine running cycles of the vehicle as shown in Fig. 1c the canister is connected via purge port 12 to engine air inlet line 13 and via vent port 28 to the atmosphere, the solenoid-controlled valve 13a being open. The vapour inlet port 10 from the fuel tank may be closed e.g. by the solenoid operated valve 11a. During this purging phase the internal combustion engine sucks a certain amount of air to be burnt within the cylinders of the internal combustion engine from the atmosphere via vent port 28 through the carbon canister and out through the purge port 12, thereby purging the absorbent material of the carbon canister of part or all of the adsorbed fuel vapour so that the cartridge retains adsorbent capacity when the engine is switched off, the direction of air and vapour flow being reversed from that of Fig. 1b as indicated by arrows.

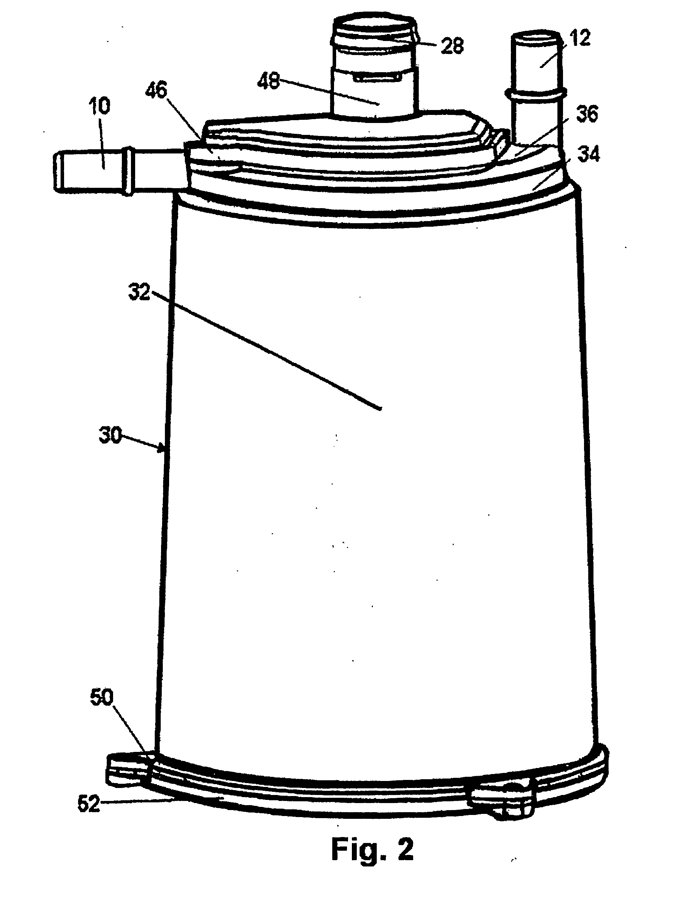

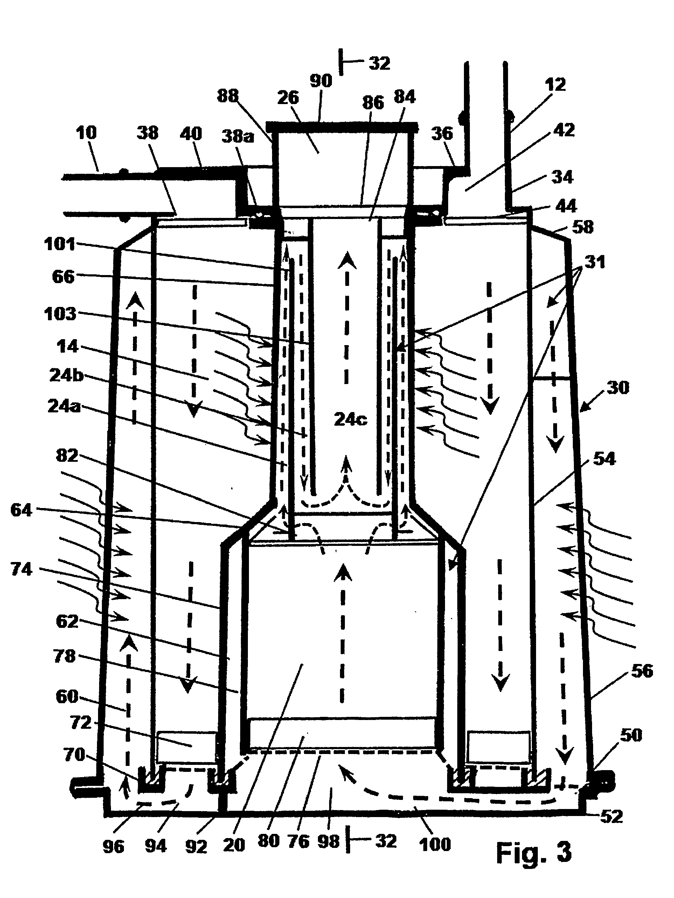

Fig 2 is an oblique view from the side and slightly above (as viewed in that figure) showing an embodiment of the fuel vapour storage canister of Figs 1a-1c. The storage canister is generally indicated by the reference numeral 30. Its structural components in this embodiment are made largely or wholly of high density polyethylene melting in some embodiments at 120-130°C, but other plastics having appropriate thermal resistance and mechanical properties may be used e.g. polypropylene, polybutylene, polyamide, polycarbonate or ABS or the exterior wall may be of metal. In this embodiment, the canister 30 has a generally cylindrical overall shape, and is largely circularly symmetric about a longitudinal axis 32 (Fig. 3). Other shapes are possible, dictated principally by the available space in the vehicle within which the canister is required to fit and be removable and replaceable. For example, the canister may be oval in section or it may be generally square or rectangular with rounded longitudinal edges. In this embodiment it has a length (parallel to axis 30) of about 220 mm, and a diameter of about 150 mm. To assist in describing the canister, the end of the canister that is uppermost in Figs 2 and 3 will be referred as the "top" of the canister, and the end of the canister that is lowermost in Figs 2 and 3 will be referred as the "bottom" or "base" of the canister. Features of the canister connecting between the top and bottom may be referred to as "sides". However, it will be appreciated that these terms are used only for ease of explanation in relation to the orientation shown in Figs. 2 and 3. In use, e.g. when installed in an automobile, van or truck, the canister 30 may be arranged in any orientation as desired to fit within a space assigned to it.

As seen in Fig. 2 the canister comprises a body 32 which in this embodiment is externally of shallow tapered conical shape close to that of a cylinder and which houses the primary and secondary adsorbent beds 14, 20. The body has at its upper end a plenum region 34 communicating fuel tank port 10 and purge port 12 with the first end of the primary adsorbent bed 14. When the canister 30 installed in a vehicle, the tank port 10 may be connected to a fuel tank of the vehicle, and the purge port connector 12 may be connected to an air inlet of an engine of the vehicle, e.g. using hoses and solenoid operated valves, in any of the usual ways for installing a carbon canister in a vehicle.

As seen in Fig 3 the canister 30 has three gas-filled spaces, generally indicated by reference numeral 31. The plenum region provides a top closure for the body 32 and is defined by a short generally cylindrical side wall, a lower face 38 and a generally annular top wall 40 that defines an annular plenum chamber 42 communicating with the ports 10, 12 and having a lower annular opening to the first end of the primary bed 14 in which is fitted an annulus of gas-permeable bed retaining material 44 e.g. polyester screen material. A central lower face region 38a is revealed within the annulus of top wall 40 and has an aperture which receives upwardly protruding tertiary bed 26. A two part cover 46, 48 fits onto the top wall 40 leaving a region 36 thereof exposed adjacent purge port 12, having a generally upwardly facing cylindrical projection that houses the upper part of the tertiary bed 26 and which terminates at port 28. The body 32 has a gas-impermeable inner side wall 54 which is generally cylindrical, a gas-impermeable outer side wall 56 which is concentric therewith and spaced radially outwardly therefrom with a shallow upward and inwards taper as shown to define an annular cavity 60 running generally around the periphery of the canister 30. The cavity 30 may be in the present embodiment of height about 220 mm and length about the periphery of the canister of about 44o mm. The outer side wall 56 is in-turned at region 58 at its upper end to meet the inner side wall 54 and its lower end is formed with out-turned flange 50 to which a mating flange of lower end cap 52 fits to provide a fluid-tight lower closure for the canister. The inner side wall 54 defines an interior volume for the canister. In this embodiment the interior volume is cylindrical and has a diameter of about 130 mm. A central wall extends from base to top of the canister to define a passage through the canister. It is formed with a relatively large diameter lower region 62, an inwardly stepped frustoconical region 64 partway along its length and a smaller diameter upper region 66.

Primary adsorbent bed 14 is annular and extends substantially the axial length of the canister between inner side wall 54 and central wall 62, 64, 66, being of axial length in this embodiment about 200 mm. Its upper region closer to port 10 and plenum chamber 42 is of relatively large thickness, in this embodiment about 40 mm, and its lower region below the frustoconical wall region 64 is in this embodiment of thickness about 20 mm. The lower end of the bed 14 is contained by foraminous cover 70 which is a push fit or is attached to lower ends of walls 54.62 and by a gas-permeable annular diffuser 72 of foam plastics, spunbonded material or the like so that gas can flow in either direction through bed 14 as in Figs 1b and 1c. Secondary adsorbent bed 20 is in this embodiment cylindrical and is located within the passage through the canister between the frustoconical wall region 64 and the lower end of the passage. A fluid-impermeable side wall 74 retaining the bed 20 depends from the frustoconical region 64 partway along its length and is attached to or formed integrally with the central wall. It defines a gas space 78 which forms a thermal barrier between the lower part of the primary adsorbent bed 14 and the secondary bed 20, and its lower end meets a fluid-permeable foraminous region 76 of the cover 70. The secondary bed 20 is supported and retained at its lower end by a gas-permeable disc 80 of foam plastics, spunbonded material or the like and is retained at its upper end by a disc 82 of gas-permeable material e.g. a polyester-based screen. In this embodiment it has a diameter of about 65 mm and a length (parallel to axis 32) of about 70 mm. As previously explained the tertiary adsorbent bed 26 in this embodiment is not contained within but projects upwardly from the envelope defined by the housing 32. It is defined at its lower end by a foraminous support 84 and by fluid permeable diffuser disc 86 of foam plastics, spunbonded material or the like, by upstanding cylindrical sidewall 88 and at its upper end by disc 90 which may be a polyester-based screen. In this embodiment the tertiary bed has a diameter of about 50 mm and a length (parallel to axis 38) also of about 50 mm. The third bed is concentrically aligned with the first and second fuel vapour storage compartments. It will be appreciated that the word "concentrically" is used herein figuratively to refer not only to the present embodiment in which the canister has cylindrical or frustoconical walls but also in relation to other embodiments where the shape is oval, square, rectangular or the like, but the centres of the beds 14, 20, 26 coincide generally as shown. It will also be appreciated that some displacement of the second and third beds from strict concentricity with the first bed can be accommodated provided that their function and those of the various air transfer passages is not unduly impeded.

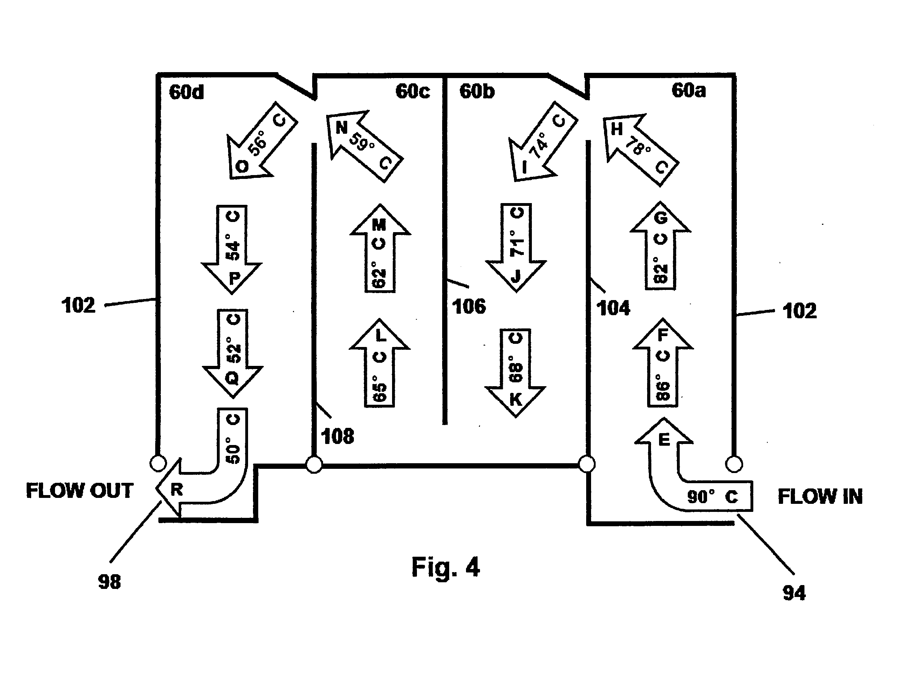

Gas passage 18 between the second side of the primary bed 14 and the first side of the secondary bed 19 is defined by portions of the end cap 52 and by the gas-filled space 60 which surrounds the primary bed 14. Fig 4 shows a planar development of the gas-filled space 60 from which it may be seen that the space is divided by a partition 102 extending the full height of the space 60 and partitions 104, 106, 108 extending alternately from the lower and upper ends of the space partway therealong to define flow channels 60a, 60b, 60c and 60d along which gas flows in boustrophedon manner (i.e. alternating in direction from one flow channel to the next) along the periphery of the canister and in heat-exchange relationship with the bed 14. In this embodiment there are three part-height partitions 104, 106, 108 so that the gas flow makes four passes in side-by-side relationship along the length of the canister, but other arrangements are possible. If there were a single partition then the gas would make two passes along the length of the canister. With five such alternating partitions there would be six passes and with seven such partitions the gas would make eight passes. There is an inverse relationship between air path length and diffusion mass (g/100 ml of carbon) and the very extended gas passage between the primary and secondary adsorbent beds 14, 20 helps to reduce diffusion of hydrocarbon from one bed to another e.g. while the vehicle is standing. The space 60 therefore serves the dual purposes of providing a long air path between adsorbent beds and providing an integrated ans self-active heat exchanger. There are ports 94, 98 for gas inflow into and outflow from the gas-filled space 60, these being disposed at lower ends of flow channels 60a and 60d defined adjacent to and on opposite sides of full-height partition 102. Referring once more to Fig. 3, structure associated with end cap 52 including partition 92 defines the first port 94 which provides a gas flow connection between the second end of the bed 14 and the space 60 as indicated by arrow 96 and defines the second port 98 which provides a gas flow connection from the space 60 to the first end of the bed 20 as shown by arrow 100.

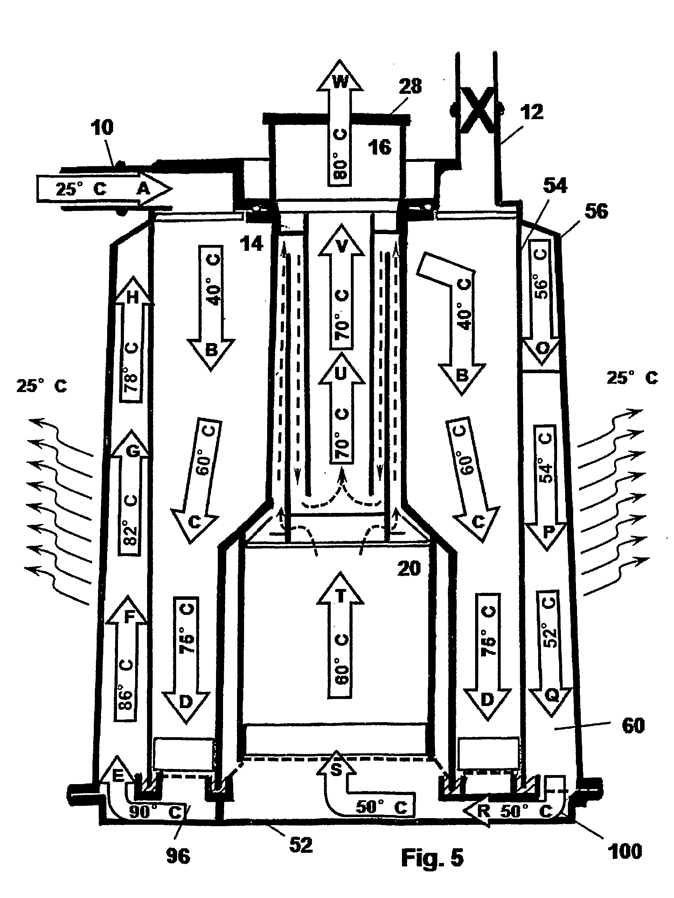

Gas passage 24 between the second and third adsorbent beds 20 is in this embodiment folded longitudinally into passages 24a, 24b, 24c so that the gas in its passage between the two beds makes three passes along the relevant part of the length of the canister. Folding is by upstanding and depending cylindrical walls 101, 103 each extending most but not all of the length of the passage 24. However this folding is optional, and in the embodiment of Fig. 5 the fold-defining walls 101, 103 are omitted. Whether the gas passage is plain as in Fig. 5 or is folded as in Fig. 3, the path length that it creates helps to reduce diffusion mass between the secondary and tertiary beds 20, 26 and therefore helps further reduce emission of hydrocarbon vapour.

In Figs. 4 and 5, air-flow through the canister in loading mode is schematically indicated by a series of block arrows identified by a letter and a representative temperature for the air. The temperatures have not been modelled for the specific canister design and loading operation, but are selected purely as examples to demonstrate the principles underlying the operation of the canister. For the loading mode represented in Figs. 4 and 5, the tank port 10 is connected freely to the vehicle's fuel tank. However, air flow through the purge port 12 is blocked, e.g. using a conventional solenoid operated valve in a conduit connecting the purge port connector to the vehicle's engine, as schematically indicated in the figure by the heavy cross (in other embodiments the purge port connector may remain freely connected to the vehicle's engine during loading). During loading, the air pressure at the tank port 10 becomes increased. This may be because of thermal expansion of fuel/fuel vapour in the tank in the case of diurnal breathing loss (bleeding), or as fuel pumped into the vehicle's tank displaces air in the case of refuelling loss. The increased pressure at the tank port 10 pushes air through the canister 30 to the vent port 28. In this example it will be assumed the vehicle is in the process of being fuelled, and this is what is driving air through the canister. As previously explained flow rates during refuelling loading might typically be as high as 60 litres per minute, which means the exothermic absorption of hydrocarbon occurs relatively rapidly leading to relatively high temperatures. For example, fuel-laden air passing thorough a single typically sized carbon bed at this rate might become heated to 90°C or so, perhaps as high as 120°C for a "fresh" canister that is fully purged. Nonetheless, similar air-flows occur during bleeding too, although generally at a slower rate.

Thus, as indicated in Fig. 4 by the air-flow arrow marked A, fuel-laden air displaced from the fuel tank enters the canister through the port 12. In this example it is assumed the ambient temperature is 25°C, and so this is the temperature of the air entering the canister. Air-flow arrows B, C and D represent the air as is passes through the primary adsorbent bed 14. Fuel vapour in the air is absorbed by the carbon granules in this bed, which is exothermic and so the air becomes heated e.g. to a temperature of 90°C by adsorption as it is passes through the bed 14. If air exiting the bed 14 at this temperature were to be routed directly into the secondary adsorbent bed 20, adsorption within that bed would be relatively inefficient because of the high temperature of the air. However, in accordance with embodiments of the invention, air is first passed through the cavity 60. Air passing into the first flow channel 60a is at a temperature of around 90°C as schematically indicated in Figs. 4 and 5 by arrow E. As air travels through the cavity it is in close contact with the outer wall 56 of the canister which in turn is in contact with ambient air at 25°C. The outer wall 56 cools the warm air entering the cavity 60 by thermal conduction (as schematically indicated in Fig. 5 by wavy arrows directed away from the canister). It may in some embodiments be helpful to increase the effective thermal mass of the wall 56, e.g. by adding a heat-sink element, such as a metal radiator element, or a chamber of thermal wax in thermal contact with the outer wall 56 (or the outer wall 56 itself may be metal). Air passing through flow channels 60a - 60d becomes cooled as indicated by the temperatures in arrows F - R, exiting at about 54°C, the rate of cooling in channel 60a being somewhat greater than that in channel 60d because of the greater difference between the air temperature in channel 60a and ambient temperature compared to the corresponding values in channel 60d. Air passes to the secondary adsorbent bed 20 at a temperature close to 50°C rather than at a temperature of about 90°C, and loading in the secondary adsorbent bed is more efficient than would have without cooling.

Arrow T (Fig. 5) represents air midway through the secondary adsorbent bed 20. This air has lost additional fuel vapour through adsorption by the carbon granules in the bed 20 which as a result of further exothermic reaction returns to 60°C degrees at this point. Exothermic heating continues through the secondary adsorbent bed 20 and air is assumed here to exit it and enter the channel 24 between the second and third fuel vapour storage compartments at a temperature of around 70°C, as indicated in Fig. 5 by air-flow arrow U. Air-flow arrow V represents the air as it approaches the tertiary adsorbent bed 26. The air in this region is assumed to be at 70°C, i.e. the same as in the region represented by arrow U. Arrow W represents air that has passed through the bed 26 and is vented to atmosphere. In passing through the tertiary bed the air has deposited more fuel vapour through absorption by the carbon granules. This has caused more exothermic heating, and, in this example, the air is taken to be 80°C on exit to the atmosphere. In practice the temperature increase in the tertiary bed 26 may be relatively small as the air will already have had much of its fuel vapour removed in primary and tertiary beds (especially in the primary bed), thus resulting in correspondingly less exothermic absorption in the third compartment. However, as noted above, the exemplified temperatures used here are for demonstrating the principle of embodiments of the invention, and are not intended to represent an accurate model of the canister's behaviour under any particular conditions

Thus, as described with reference to Figures 4 and 5, the canister 30 shown in Figs. 2 and 3 can allow for more efficient loading of hydrocarbons into the fuel absorbent material. This more efficient absorption is achieved by allowing ambient air to cool air heated by exothermic absorption during loading in the primary adsorbent bed so that that absorption in subsequent adsorbent bed(s) is more efficient. More efficient loading can help reduce overall evaporative emissions since a greater fraction of the fuel vapour in the air from the fuel tank is absorbed in the canister, resulting in cleaner air being emitted from the atmosphere port 28.

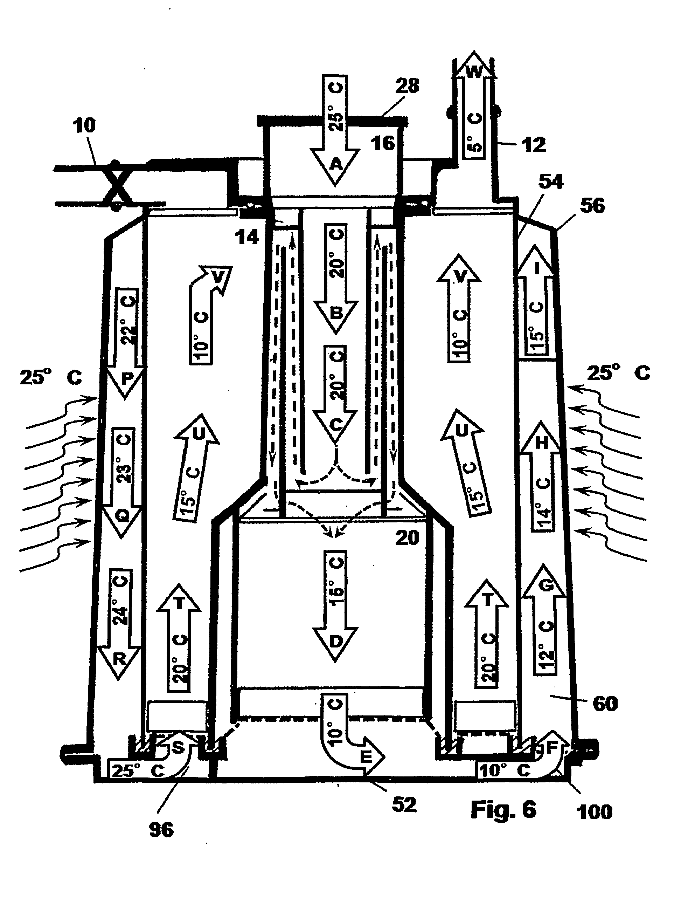

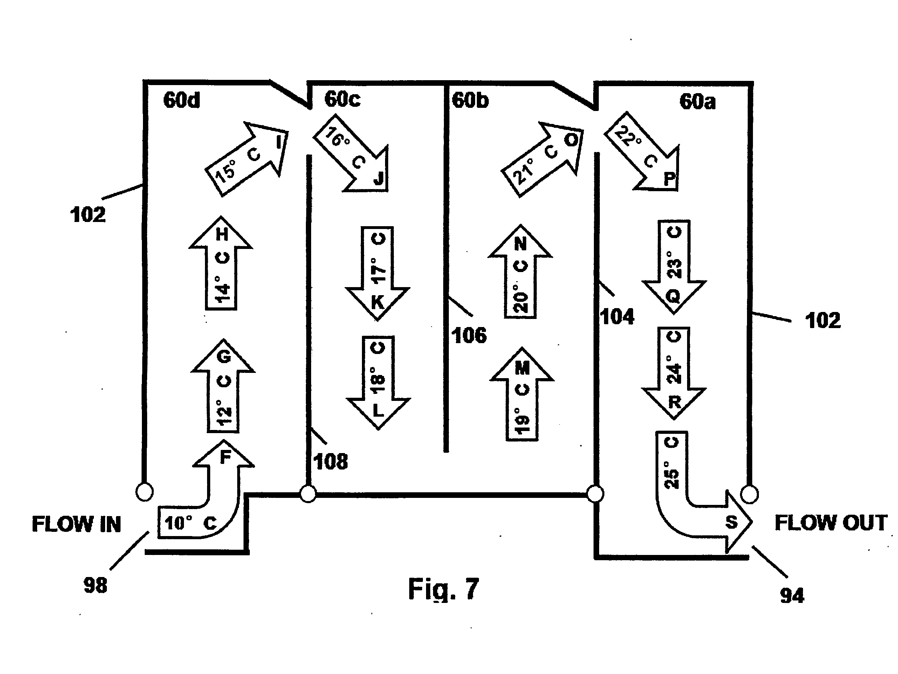

Figs 6 and 7 schematically show air-flow paths within the canister 30 in a purging mode, i.e. when removing fuel vapour stored in the canister during a previous loading cycle. Again the air-flow paths are schematically indicated by a series of block arrows. A letter is provided in the head of each arrow as a means of identification, with air-flow in the canister passing from A to B to C to D.... and so on. Each arrow is also associated with a temperature indication and represents the temperature of the flowing air in the region of the respective arrows. These temperatures have not been modelled for this specific canister design, but are used as examples to demonstrate the principles underlying the operation of the canister.

For the purging mode represented in Figs. 6 and 7, the purge port 12 is connected freely to a vacuum port of the vehicle's engine and air flow through the tank port 10 is blocked, e.g. using a conventional solenoid operated valve in a conduit connecting the tank port 10 to the vehicle's fuel tank, as schematically indicated in the figure by the heavy cross. This prevents fuel vapour laden air from the vehicle's fuel tank from entering the carbon canister during purging. As is conventional, purging occurs when the vehicle's engine is running, meaning the air pressure at the purge port 28 is lowered and air from the ambient atmosphere is drawn through the canister. As indicated in Fig. 6 by the air-flow arrow marked A air at 25°C. is first drawn into the canister through port 28. Arrow B represents air that has passed through the tertiary adsorbent bed 26 and which now contains fuel desorbed from the carbon granules in that bed. Desorption is endothermic, and so the air becomes cooled on passage through the tertiary adsorbent bed e.g. to 20°C. Arrow C represents air as it approaches the secondary adsorbent bed 20. The air in this region is assumed to be also at 20°C but in practice the air might be cooled slightly in passing from arrow B to arrow C since the surrounding primary adsorbent bed 14 is likely to be colder than the air in the passage 24. Arrow D represents air midway through the secondary adsorbent bed 20. This air has picked up more fuel vapour from desorption from the carbon granules in the bed 20 which has caused further endothermic cooling, in this example to 15°C. Desorption is less efficient at lower temperatures so that volume-for-volume during purging, fuel vapour is extracted from the secondary adsorbent bed 20 with less efficiency than from the tertiary adsorbent bed. Endothermic cooling continues as air passing through the second fuel vapour storage compartment continues to pick up desorbed fuel vapour, and as a result air is assumed here to exit the bed 20 at about 10°C as indicated by arrow E. If the air exiting the bed 20 at this temperature were to be routed directly into primary adsorbent bed 14 for continued purging, desorption in the primary adsorbent bed 14 would be inefficient because of the coldness of the air. However, in accordance with embodiments of the invention, air is not passed directly to the bed 14, but is first passed through the cavity 60 between the inner 54 and outer 56 walls of the canister where it becomes warmed by heat exchange across wall 56 with ambient air.

Air passes from the region of air-flow arrow E along the second intermediate air-flow channel 84 (not specifically represented in Figures 5 or 6) so as to enter the cavity 35 through second cavity port 62, as indicated in Figures 5 and 6 by air-flow arrow F. The air in the region is still taken in this simple demonstration example to be at 10 degrees. It enters flow passage 60d (Fig. 7) through second port 98 and is drawn through the flow path defined by inner and outer walls 54, 56 and by the partitions 102-109. Again the flow path has an effective length that about four times the height of the cavity. As air is drawn through the cavity 60 it is in close contact with the outer wall 56 of the canister, which in turn is in contact with ambient air at 25°C. The outer wall of the cavity thus acts as a heat source to warm the cold air passing through the cavity 60 by thermal conduction as schematically indicated in Fig. 6 by wavy arrows. Again, it may in some embodiments be helpful to increase the effective thermal mass of the cavity wall 56, e.g. by adding a heat-sink element, such as a metal radiator element, or by making the outer wall 56 of metal. Air flows through cavity 60 along channels 60d-60a to port 94, representative temperatures being indicated by air-flow arrows F, G, H, I, J, K, L, M, N, O, P, Q, R, and S. In this example it is assumed the air remains in the cavity for long enough and/or the conduction efficiency through the wall is high enough that the air becomes fully warmed to ambient temperature (25°C) as it exits through port 61 as indicated by arrow S. As indicated by the temperatures marked on the respective air-flow arrows in Fig. 7, the air passing through the cavity in this example warms continuously along its path, but is shown warming slightly faster at the beginning of its path through the cavity than towards the end because of the greater temperature differential between the air and the canister outer wall 56 (e.g. 2°C between arrows G and H compared to 1 °C between arrows Q and R).

The warmed air returns from cavity 60 through port 96 into the annular primary adsorbent bed 14 through the meshed or foraminous lower wall thereof The warmed air provides for more effective purging of the bed 14 than would have been the case without heat exchange cavity 60. Air-flow arrows T, U and V schematically show the air passing through the primary bed 14 towards purge port 12. Air leaving the canister 30 through that port, as schematically indicated by air-flow arrow W, is at 5°C, whereupon it is drawn into the vehicle's engine and the fuel vapour picked-up by the air during its passage through the canister in the desorption/purging process is burnt in the engine. The connection from the purge port 12 to the vehicle engine may remain open for so long as the engine is running so that air continues to be drawn through the canister to recover as much as fuel vapour as possible from the carbon granules and regenerate them for further adsorption when the engine is switched off. Alternatively, it may be decided that an acceptable level of purging would have occurred after a certain length of time, and the connection between purge port connector 12 to the vehicle engine blocked after this time (e.g. by solenoid operated valve) so that no further air is drawn through the canister.

Thus as described above, the canister 30 shown in Figures 2 and 3 can allow for faster desorption of hydrocarbons stored in the fuel absorbent material in a multicompartment (in this case there are three compartments, but in other cases more, or only two, compartments may be used) than would otherwise be possible, especially for a carbon canister without a heater. This faster desorption is achieved by allowing ambient air to warm the air cooled by endothermic desorption during purging such that subsequent desorption in the air as it passes through the canister is more efficient. More efficient purging can help reduce overall evaporative emissions since the storage capacity of the canister for the loading cycle can in effect be increased if the canister is more effectively "cleaned" in the intervening purging cycles. This can be particularly significant, for example, where the available purging time is relatively short, for example, because the vehicle is only used for short journeys or because the engine is incorporated into a hybrid vehicle. It is predicted that embodiments of the invention may achieve a pressure drop of ≤1.2kPa at 60L/min, a LEVII purge volume <50 B.V. (bed volumes) and a PZEV purge volume <80 B.V.

Various modifications may be made to the embodiment described above without departing from the invention. For example in Fig. 8, the tertiary adsorbent bed 26 is relocated within the passage through adsorbent bed 14 partway along the length of that passage and in contact with or in spaced relationship from the secondary adsorbent bed 20. Between the bed 26 and port 28 there are provided heater elements 120 e.g. in the form of carbon monoliths as described in US 2007-0056954. The heating elements 120 only activated during the purging operation of the fuel vapour storage and recovery apparatus and serve to heat air drawn from the atmosphere, which as described above is known to improve the efficiency of purging. This is because hydrocarbons are more readily purged (desorbed) from the absorbent material in warmer conditions than in colder conditions. In combination with the folded or multi-pass first fluid passage 18 which also serves as a heat exchanger for the primary adsorbent bed it is predicted that in a hybrid vehicle required to meet PZEV standards a purge volume of ≥50B.V may be sufficient with hydrocarbon emissions < 2mg/day.

## Claims

1. An absorbent canister for control of emission from an automobile fuel tank said canister comprising:
a tubular primary absorbent bed (4) of activated carbon configured for flow end-to end and having a side wall (54) and a central wall (62, 64, 66) defining an internal passage through the canister;
a fuel tank port (10) and a purge port (12) in communication with a first end of the primary absorbent bed for connection to a fuel tank vapour line (11) and an engine purge line (13);
a secondary adsorbent bed (20) of activated carbon located within said internal passage;
a flow passage (18) in communication with a second end of the primary absorbent bed (14) and with a first end of the secondary absorbent bed (20) to connect said primary and secondary adsorbent beds in series, a second end of the secondary absorbent bed being in communication with said internal passage;
wherein the flow passage (18) includes a heat exchanger (60) which surrounds the primary absorbent bed covering the side wall (54) and is configured to exchange heat between the primary adsorbent bed and ambient air, the heat exchanger being internally partitioned to lead the air in a winding path (60a-60d) over an external wall of the primary adsorbent bed.

2. The canister of claim 1, wherein internal partitions (104, 106, 108) of the heat exchanger (60) are configured so that the gas makes two, four or six passes over the surface of the side wall (54).

3. The canister of claim 1 or 2, wherein walls (62, 74) of the internal passage and the secondary adsorbent bed define an air space (78) between the primary and secondary adsorbent beds (14, 20).

4. The canister of claim 1, 2 or 3, further comprising a tertiary adsorbent bed (26) and a second flow passage (24) connecting the secondary and tertiary adsorbent beds in series.

5. The canister of claim 4, wherein the tertiary adsorbent bed (26) is located in the internal passage.

6. The canister of claim 4, wherein the tertiary adsorbent bed (26) projects from an end of the internal passage.

7. The canister of claim 5 or 6, wherein partitions (101, 103) fold the second air path (24a-24c) so that the air makes three passes between the secondary and tertiary adsorbent beds (20, 26).

8. The canister of claim 5 or 6, wherein a heater (120) is connected in series between the third adsorbent bed (26) and an outlet (28) of the internal passage.

9. The canister of claim 8, wherein the heater (120) comprises one or more tubular carbon monoliths.

10. A vehicle fuel tank having the canister of any preceding claim connected thereto.

11. The fuel tank of claim 10, which is of a passenger car.

12. The fuel tank of claim 10 or 11, which is of a hybrid internal combustion/electric vehicle.

## Patentansprüche

1. Adsorbensbehälter zur Steuerung der Emissionen aus einem Automobilkraftstofftank, wobei der Behälter Folgendes umfasst:
ein rohrförmiges Hauptadsorbentienbett (4) aus Aktivkohle, welches von Ende zu Ende durchströmbar ist und eine Seitenwand (54) und
eine mittlere Wand (62, 64, 66) umfasst, die einen inneren Kanal durch den Behälter bilden;
einen Kraftstofftankanschluss (10) und einen Rückspülanschluss (12), welche mit einem ersten Ende des Hauptadsorbentienbetts zwecks Verbindung einer Kraftstofftankentlüftungsleitung (11) und
einer Rückspülleitung (13) kommunizieren;
ein sekundäres Adsorbentienbett (20) aus Aktivkohle, welches innerhalb des inneren Kanals angeordnet ist;
einen Durchflusskanal (18), der mit dem zweiten Ende des Hauptadsorbentienbetts (14) und mit dem ersten Ende eines sekundären Adsorbentienbetts (20) kommuniziert, um das primäre und sekundäre Adsorbentienbett in Reihe miteinander zu verbinden,
wobei das zweite Ende des sekundären Adsorbentienbetts (20) mit dem inneren Kanal kommuniziert;
wobei der Durchflusskanal (18) einen Wärmetauscher (60) umfasst,
der das Hauptadsorbentienbett umgibt, welches die Seitenwand (54) abdeckt, und welcher zur Durchführung eines Wärmetauschs zwischen dem primären Adsorbentienbett und der Umgebungsluft ausgebildet ist, wobei der Wärmetauscher innen partitioniert ist, um Luft in einem verschlungenen Pfad (60a bis 60d) über eine äußere Wand des primären Adsorbentienbetts zu führen.

2. Behälter nach Anspruch 1, bei welchem die inneren Partitionierungen (104, 106, 108) des Wärmetauschers (60) so ausgebildet sind, dass das Gas zwei-, vier- oder sechsfach über die Oberfläche der Seitenwand (54) geführt wird.

3. Behälter nach Anspruch 1 oder 2, bei welchem die Wände (62, 64) des inneren Kanals und des sekundären Adsorbentienbetts einen Luftraum (78) zwischen den primären und sekundären Adsorbentienbetten (14, 20) definieren.

4. Behälter nach einem der Ansprüche 1, 2 oder 3, weiterhin umfassend ein tertiäres Adsorbentienbett (26) und einen zweiten Durchflusskanal (24), der das sekundäre und das tertiäre Adsorbentienbett in Reihe miteinander verbindet.

5. Behälter nach Anspruch 4, bei welchem das tertiäre Adsorbentienbett (26) in dem inneren Kanal angeordnet ist.

6. Behälter nach Anspruch 4, bei welchem das tertiäre Adsorbentienbett (26) von einem Ende des inneren Kanals hervorsteht.

7. Behälter nach einem der Ansprüche 5 oder 6, bei welchem die Partitionierungen (101, 103) den zweiten Luftpfad (24, 64) so falten, dass die Luft drei Durchgänge zwischen dem sekundären und tertiären Adsorbentienbett (20, 26) vollzieht.

8. Behälter nach einem der Ansprüche 5 oder 6, bei welchem eine Heizeinrichtung (120) in Reihe zwischen dem dritten Adsorbentienbett (26) und einem Auslass (28) des inneren Kanals angeordnet ist.

9. Behälter nach Anspruch 8, bei welchem die Heizeinrichtung einen oder mehrere rohrförmige Kohlemonolithen umfasst.

10. Kraftstoffbehälter, der mit einem Behälter nach einem der vorstehenden Ansprüche verbunden ist.

11. Kraftstoffbehälter nach Anspruch 10, der als Kraftstoffbehälter eines Kraftfahrzeuges zum Personentransport ausgebildet ist.

12. Kraftstoffbehälter nach einem der Ansprüche 10 oder 11, welche als Kraftstoffbehälter eines hybriden Elektro-/Verbrennungsmotorfahrzeuges ausgebildet ist.

## Revendications

1. Réservoir absorbant pour le contrôle des émissions d'un réservoir de carburant pour automobile, ledit réservoir comprenant :
un lit absorbant principal tubulaire (4) de charbon actif configuré pour l'écoulement bout à bout et ayant une paroi latérale (54) et une paroi centrale (62, 64, 66) définissant un passage interne à travers le réservoir ;
un orifice de réservoir de carburant (10) et un orifice de purge (12) en communication avec une première extrémité du lit absorbant principal pour le raccordement à une conduite de vapeur de réservoir de carburant (11) et une conduite de purge de moteur (13) ;
un lit absorbant secondaire (20) de charbon actif positionné à l'intérieur dudit passage interne ;
un passage d'écoulement (18) en communication avec la seconde extrémité du lit absorbant principal (14) et avec une première extrémité du lit absorbant secondaire (20) pour raccorder lesdits lits absorbants principal et secondaire en série, une seconde extrémité du lit absorbant secondaire étant en communication avec ledit passage interne ;
dans lequel le passage d'écoulement (18) comprend un échangeur de chaleur (60) qui entoure le lit absorbant principal recouvrant la paroi latérale (54) et est configuré pour échanger la chaleur entre le lit absorbant principal et l'air ambiant, l'échangeur de chaleur étant séparé intérieurement pour amener l'air dans une trajectoire d'enroulement (60a-60d) sur une paroi externe du lit absorbant principal.

2. Réservoir selon la revendication 1, dans lequel les séparations internes (104, 106, 108) de l'échangeur de chaleur (60) sont configurées de sorte que le gaz fait deux, quatre ou six passages sur la surface de la paroi latérale (54).

3. Réservoir selon la revendication 1 ou 2, dans lequel les parois (62, 74) du passage interne du lit absorbant secondaire définissent un espace d'air (78) entre les lits absorbants principal et secondaire (14, 20).

4. Réservoir selon la revendication 1, 2 ou 3, comprenant en outre un lit absorbant tertiaire (26) et un second passage d'écoulement (24) raccordant les lits absorbants secondaire et tertiaire en série.

5. Réservoir selon la revendication 4, dans lequel le lit absorbant tertiaire (26) est positionné dans le passage interne.

6. Réservoir selon la revendication 4, dans lequel le lit absorbant tertiaire (26) fait saillie à partir d'une extrémité du passage interne.

7. Réservoir selon la revendication 5 ou 6, dans lequel les séparations (101, 103) plient la seconde trajectoire d'air (24a-24c) de sorte que l'air fait trois passages entre les lits absorbants secondaire et tertiaire (20, 26).

8. Réservoir selon la revendication 5 ou 6, dans lequel un dispositif de chauffage (120) est raccordé en série entre le troisième lit absorbant (26) et une sortie (28) du passage interne.

9. Réservoir selon la revendication 8, dans lequel le dispositif de chauffage (120) comprend un ou plusieurs monolithes de carbone tubulaires.

10. Réservoir de carburant pour véhicule ayant le réservoir selon l'une quelconque des revendications précédentes, raccordé à ce dernier.

11. Réservoir de carburant selon la revendication 10, qui est prévu pour une voiture de tourisme.

12. Réservoir de carburant selon la revendication 10 ou 11, qui est prévu pour un véhicule hybride à combustion interne/électrique.
